# EUROPEAN PATENT SPECIFICATION

(11) **EP 3 997 024 B1**
(45) Date of publication and mention of the grant of the patent: **24.06.2026**
(21) Application number: 20745289.7
(22) Date of filing: 30.06.2020
(51) Int. Cl.: B66B 1/46, B66B 1/34

(54) **A SYSTEM AND METHOD FOR AUTOMATICALLY CALLING ELEVATOR/S**
SYSTEM UND VERFAHREN ZUM AUTOMATISCHEN RUFEN VON AUFZÜGEN
SYSTÈME ET PROCÉDÉ D'APPEL AUTOMATIQUE D'ASCENSEUR/S

(30) Priority: 12.07.2019 IN 201911028099
(43) Date of publication of application: 18.05.2022
(73) Proprietor: Honeywell International Inc., Charlotte, NC 28202 (US)
(72) Inventor: KANTETI, Neeraja, Telangana 500081 (IN)
(74) Representative: Dehns
(86) International application number: PCT/IB2020/056178
(87) International publication number: WO 2021/009598

(56) References cited:
- WO-A1-2007/093665
- WO-A1-2013/191705
- WO-A1-2015/094178
- WO-A1-2018/213008

## Description

The present invention relates generally to elevator systems. More particularly, the invention relates to a system and method for automatically calling an elevator.

At present, most buildings have elevators which are used by various visitors or guests of the buildings to reach a destination floor. The elevators in the buildings save visitors' time to reach the floor and are much preferred over stairs of the building which the visitors have to manually climb to reach the floor in the building.

In order to take the elevator for reaching the destination floor in the building, the visitor/ guest has to first reach the location in the building where the elevator is situated. Then, the user has to press a button to call the elevator and has to wait until the elevator reaches the floor where the visitor is waiting for the elevator. Such steps consume visitors' precious time and require the visitor to wait for the arrival of the elevator. Hotel guests typically use elevators whenever they exit room and there is always a waiting time.

In view of the aforementioned problems, there is a need for an effective system and method for calling an elevator of a building. If the elevator arrives to the floor as a guest exits a room and by the time guest walks to the elevator, if it is already there, then lot of waiting time is reduced. There is also a need for a system and method for automatically calling the elevator that does not require the visitors or guests of the building to wait for an elevator. In order to solve the problems in the existing art, systems and methods are disclosed for automatically calling the elevator that addresses the aforementioned problems.

WO 2018/213008 A1 discloses a method and system for calling an elevator. A door lock detects a status parameter of the door (e.g. if the door is closed or open), and transmits the status parameter to a remote device. The remote device determines, in response to the status parameter, whether to call an elevator. The remote device transmits an elevator call request to a controller when it is determined to call the elevator. Using the controller, the elevator is then moved to a floor where the door lock is located.

WO 2007/093665 A1 discloses a method and system for producing services in a communication system of a building.

WO 2013/191705 A1 discloses a method and system for controlling access to an elevator system.

WO 2015/094178 A1 discloses a method and system for controlling an elevator.

Viewed from a first aspect of the invention, there is disclosed a method as claimed in claim 1. The method comprises:advertising a state of an accessing device associated with premises; transmitting the state of the accessing device to a user device; receiving at the accessing device, from the user device, a request along with information provided by a user to call an elevator after transmitting the state; and transmitting, using the accessing device, the request and the information to a server for automatically calling the elevator; wherein the server communicates with a third party provider to initiate calling of the elevator based on the information.

The state associated with the accessing device may include an open state and a close state of the accessing device.

The information may include input provided by the user in response to a prompt by the user device.

The method may comprise the steps of: receiving at the user device, from the accessing device, the state of the accessing device associated with the premises; prompting the user of the user device to provide the information in response to receiving of the state; and transmitting using the user device the request along with the information provided by the user to the accessing device.

The user device may estimate a time for the user to reach the elevator.

The state associated with the accessing device may include an open state or a close state of the accessing device.

The information may include input provided by the user in response to a prompt by the user device.

The prompt may include one or more questions posed to the user with respect to the state.

The questions posed to the user may include: a question related to use of the elevator, a question related to exit from the premises, a question related to a destination floor of the user, or a question related to using any facility in the premises.

Viewed from a second aspect of the invention, there is disclosed a system as claimed in claim 10. The system comprises: an accessing device; a user device; and a server. The accessing device includes: a transceiver configured to advertise a state of the accessing device associated with premises and to transmit the state of the accessing device to a user device. The user device includes: a receiver configured to receive, from the transceiver of the accessing device, a state associated with the accessing device; an interface configured to prompt a user of the user device to provide information in response to receiving of the state; and a transmitter configured to transmit a request along with the information provided by the user to the accessing device for automatically calling an elevator. The accessing device receives the request along with the information and communicates the request along with the information to the server through a service network. The server communicates with a third party provider to initiate calling of the elevator based on the information.

The state associated with the accessing device may include an open state or a close state of the accessing device.

The information may include input provided by the user in response to a prompt by the user device.

The prompt may include one or more questions posed to the user with respect to the state. The questions posed to the user may include: a question related to use of the elevator, a question related to exit from the premises, a question related to a destination floor of the user, or a question related to using any facility in the premises.

Other aspects, advantages, and salient features of the invention will become apparent to those skilled in the art from the following detailed description, which, taken in conjunction with the annexed drawings, discloses exemplary embodiments of the invention.
Figure 1 depicts an exemplary architecture for automatically calling an elevator.
Figure 2 depicts block diagram of different components in an accessing device.
Figure 3 depicts block diagram of different components in a user device.
Figure 4 depicts an exemplary flowchart illustrating a method.
Figure 5 depicts an exemplary flowchart illustrating a method.
Figure 6 depicts an exemplary prompt/s provided to a user.

Corresponding reference numerals indicate corresponding parts throughout the drawings.

Described herein is a system and method for automatically calling an elevator. The elevator is automatically called by using a server when the accessing device receives a request from a user device. The request is based on information provided by a user of the user device.

As used herein, the elevator may be installed in a building. Such elevator may be electric-driven or other means-driven transportation unit that carries people, cargo or anything from a floor in a building to another floor of the premises/building.

As used herein, the user device may be a desktop computer or a hand held device such as a mobile phone with network connectivity. Examples of the user equipment include a desktop, workstation PC, a laptop, a smart phone, a tablet, a wearable device and the like.

As used herein, the accessing device may be installed on a premises and may comprise a short-range transceiver, a cellular transceiver, a status detector, a keypad, a processor and a memory. The accessing device may be a lock, smart lock, a door handle with a lock, an electro-mechanical lock or any such device that is understood by a person skilled in the art. Also, the premises can be a room with a door or a floor where the accessing device can be installed.

As used herein, the server is a remote or cloud storage which is connected to the accessing device using a service network and also connected to the elevator system. The server is connected to the elevator system via a third party service.

Throughout the specification, reference numeral 102 depicts one or more premises. The reference numeral 102A, 102B, 102C... 102F may each be considered as a single premises. Likewise, reference numeral 104 depicts one or more accessing devices. The reference numeral 104A, 104B, 104C... 104F may each be considered as one accessing device.

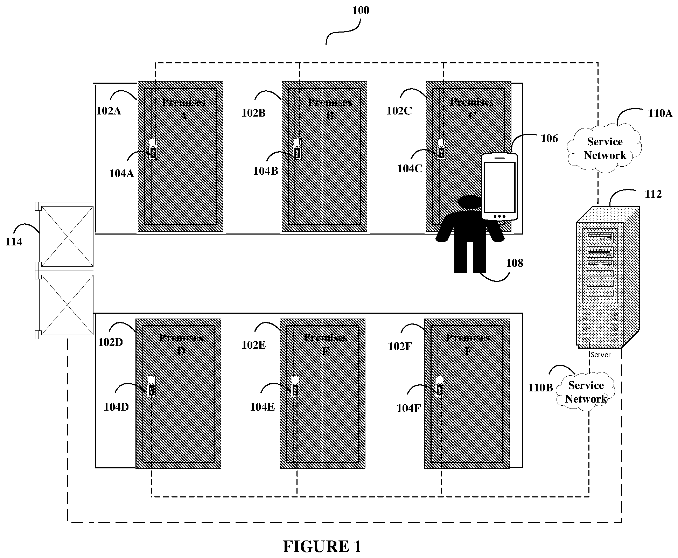

Figure 1 depicts an exemplary architecture 100 for automatically calling an elevator, according to an exemplary embodiment of the invention. The exemplary architecture 100 comprises one or more premises 102, one or more accessing devices 104 installed along with each of the premises 102, a server 112 connected with a service network 110, a user 108 associated with a user device 106 and an elevator 114.

Considering a situation that the user 108 with the user device 106 moves inside or outside the premises 102C, the accessing device 104C installed on the premises 102C may detect a status of the accessing device 104C associated with premises 102C. Once the accessing device 104C detects the state of the accessing device 104C, the accessing device 104C starts advertising the detected state. Further, the accessing device 104C may also establish a connection with the user device 106 and may get connected with the user device 106. In an embodiment, the user device 106 may be communicably coupled with the accessing device 104C using a short-range network. Such short-range network may be a bluetooth network, a WiFi network, a ZigBee network or any such network known in the art. In another embodiment, the user device 106 may be connected with the accessing device 104C using a cellular network. Such cellular network may be a GSM network, LTE network, or any other cellular network known in the art. As used herein, the state of the accessing device 104C includes, but is not limited to, an open state or a close state of the accessing device 104C. The close state of the accessing device 104C may be a state when the accessing device 104C is engaged/coupled/connected with the premises 102C. The entrance of the premises 102C is closed in the close state of the accessing device 104C. Similarly, the open state of the accessing device 104C may be a state when the accessing device 104C is disengaged/uncoupled/dis-connected with the premises 102C. The entrance of the premises 102C is opened in the dis-enagaged state of the accessing device 104C. These states are advertised by the accessing device 104C for transmission to the user device 106.

After the connection is established between the accessing device 104C and the user device 106, the accessing device 104C transmits the state of the accessing device 104 to the user device 106. The user device 106 receives the state of the accessing device 104 and in response to receiving of the state of the accessing device 104C, the user device 106 may then prompt the user 108 to provide information. As used herein, the prompt may include a set of questionnaires.

In response to the prompt, the user 108 may provide information to the user device 106. Such information includes inputs/answers provided by the user 108. Then, the user device 106 transmits the request along with the information provided by the user 108 to the accessing device 104C to call the elevator 114. When the accessing device 104C receives the request from the user device 106 to call the elevator 114, the accessing device 104C transmits the request along with the information provided by the user 108 to the server 112 through the service network 110. As used herein, the service network may be a network provided by an owner of the premises 102 and used to connect the server 112 with the accessing device 104. The server 112 communicates with a third party provider to initiate calling of the elevator 114 based on the information. Although the present invention has been described using an exemplary situation where the user 108 is moving inside or outside the premise 102C; however, it is well understood for any person that the user 108 may move inside or outside of any other premise 102A/102B/102D/102E/102F. Further, the present invention has been described considering the accessing device 102C communicates with the server 112 or the user device 106; however, it is well understood for any person that the any accessing device 104A/104B/104D/104E/104F communicates with the server 112 or the user device 106.

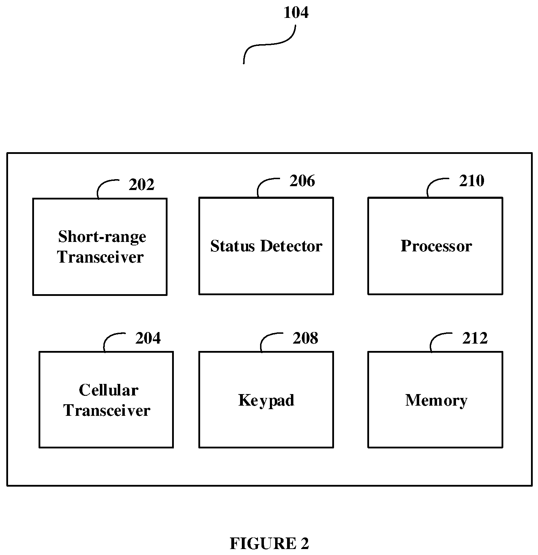

Figure 2 depicts block diagram of different components in an accessing device 104 according to an exemplary embodiment of the invention. The accessing device 104 comprises a short-range transceiver 202, a cellular transceiver 204, a status detector 206, a keypad 208, a processor 210 and a memory 212. The status detector 206 of the accessing device 104C is configured to detect a state of the accessing device 104C. The short-range transceiver 202 is configured to advertise the detected state of the accessing device 104C and to establish a communication between the accessing device 104C and the user device 106. Further, the short-range transceiver 202 is also configured to transmit the state of the accessing device 104C to the user device 106. Alternatively, the cellular transceiver 204 can also be used and may be configured to transmit the state of the accessing device 104C to the user device 106. Moreover, the short-range transceiver 202 is also configured to receive a request along with information provided by the user 108 from the user device 106 to call the elevator 114. Further, the cellular transceiver 204 or the short-range transceiver 202 is further configured to transmit the request to the server 112 for automatically calling the elevator 114. The keypad 208 of the accessing device 104C may have alphanumeric soft or hard buttons and may be configured to receive inputs from the user 108. The memory 212 of the accessing device 104C is configured to store an identifier associated with the accessing device 104C and/or an identifier associated with the premises 102C.

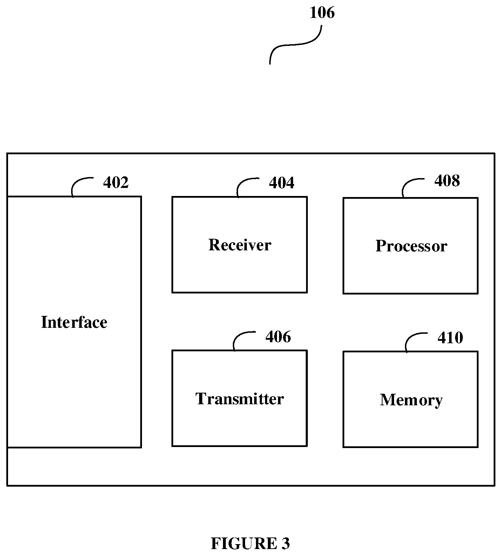

Figure 3 depicts block diagram of different components in a user device 106 according to an exemplary embodiment of the invention. The user device 106 comprises an interface 402, a receiver 404, a transmitter 406, a processor 408 and a memory 410. The receiver 404 is configured to receive, from the transceiver 202/204 of the accessing device 104C, a state of the accessing device 104C associated with the premises 102C. When the receiver 404 receives the state from the accessing device 104C, the interface 402 of the user device 106 is configured to prompt the user 108 to provide information. In response to the prompt, the user 108 may provide information to the user device 106 using the interface 402. Then, the transmitter 406 is configured to send a request along with the information provided by the user 108 to the accessing device 104C to call the elevator 114. The memory 410 is configured to store one or more applications which may perform all or any of the functions and operations as described herein.

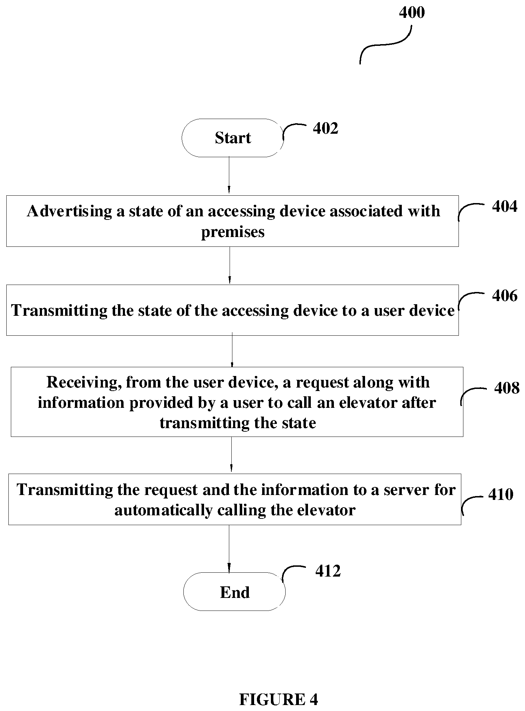

Figure 4 depicts an exemplary flowchart illustrating a method. The method flowchart 400 starts at step 402.

At step 404, the accessing device 104C installed on the premises 102C may detect a status of the accessing device 104C associated with premises 102C. Also, when the accessing device 104C detects the state of the accessing device 104C, the accessing device 104C starts advertising the detected state of the accessing device 104C associated with the premises 102C.

At step 406, when the connection is established between the accessing device 104C and the user device 106, the accessing device 104C transmits the state of the accessing device 104 to the user device 106 using the short-range network.

At step 408, the accessing device 104C receives a request along with information provided by a user 108 from the user device 106 to automatically call the elevator 114.

At step 410, the accessing device 104C transmits the request and the information to the server 112 through the service network 110 to call the elevator 114. The method flowchart ends at 412.

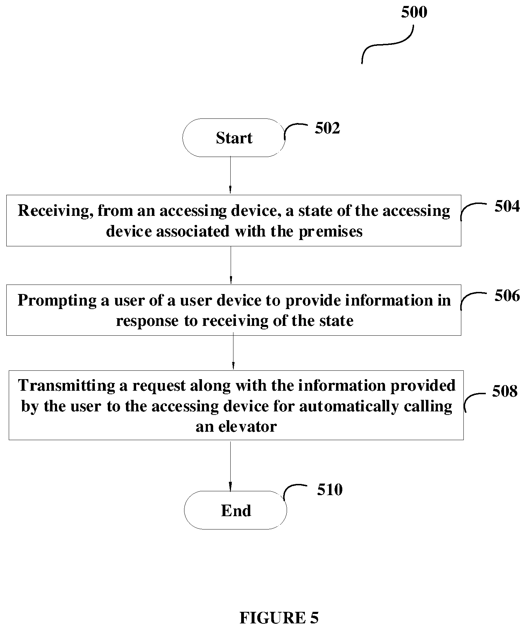

Figure 5 depicts an exemplary flowchart illustrating a method. The method flowchart 500 starts at step 502.

At step 504, the user device 106 receives a state of the accessing device 104C associated with the premises 102C from the accessing device 104C.

At step 506, the user device 106 may then prompt to the user 108 to provide information in response to receiving of the state. In response to such prompt, the user 108 may provide information to the user device 106.

At step 508, the user device 106 may transmit a request with the information provided by the user 108 to the accessing device 104C to automatically call an elevator 114. The method flowchart ends at 510.

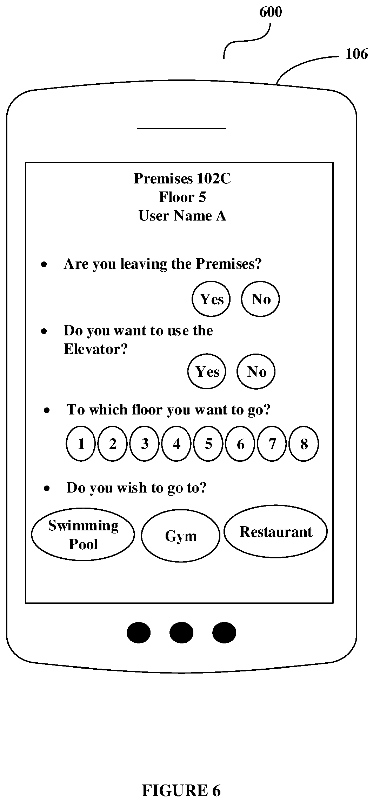

Figure 6 depicts an exemplary prompt 600 with exemplary questions for the user to provide infromation. The questions incudes "*Are you leaving the premise*?", "*Do you want to use the elevator*?", "*To which floor you want to go*?" or "*Do you wish to use any facility in the premises*" etc. Further, the prompt 600 depicts options for the user 108 to select an appropriate reponse to each of the questions. For instance, the options may inlcude, but are not limited to, providing answers in "Yes" or "No" or may ask to choose "Specific Floor" or "Specific Facility" to be used. Although the prompt 600 depicts only a few questions; however, it is well understood by a person skilled in the art that any question may be asked to the user 108 for requesting information.

Embodiments of the present invention facilitate the user 102 with the service of automatically calling the elevator 114 only when the user 102 is privileged to use such services. Embodiments of the present invention further facilitate the user device 106 and/or the accessing device 104 to store one or more preferences of the user 108. Specifically, one or more preferences of the user 108 may include preference for using the elevator 114 and/or preference for specific floors like the floor having a swimming pool or gym or restaurant. Such preferences of the user 108 may be used to automatically call the elevator 114.

Embodiments of the present invention also include the user device 106 determining a time estimation for the user 108 to reach the elevator 114 and transmitting such time determination to the accessing device 104C. The accessing device 104C sends this time determination to the server 112 and accordingly, the server 112 calls the elevator 114 based on this time determination. This time determination may be made based on a distance between the premises 102C where the user is present and the place where the elevator 114 is.

The present invention is applicable in various industries/fields such as, but not limited to, hospitality industry, housing industry, building/construction industry and any such industry/field that is well known in the art.

Embodiments of the present invention provide the following technical advantages over the existing methods and systems: a) reduces user's waiting time for calling the elevator, b) automatically calls the elevator based on information provided by the user, c) prompt the user to confirm the usage of elevator, d) confirms the user for exiting the premise, and e) provides automation for calling the elevator resulting in user's manual efforts for calling the elevator.

Embodiments of the invention can be operated using one or more computer readable devices associated with the accessing devices 104. The computer readable medium of the computer readable devices is configured to advertise a state of the accessing device 104C associated with premises 102C and transmit the state of the accessing device 104C to the user device 106. The computer readable medium of the computer readable devices is also configured to receive a request along with information provided by a user 108 from the user device 106 to call an elevator 114. The accessing device 104C transmits the request along with the information provided by the user 108 to the server 112 for automatically calling the elevator 114.

Embodiments of the invention can be operated using one or more computer readable devices associated with the user device 106. The computer readable medium of the computer readable devices is configured to receive, from the accessing device 104C, a state of the accessing device 104C associated with the premises 102C and to prompt a user 108 of the user device 106 to provide information in response to receiving of the state. The computer readable medium of the computer readable devices is configured to transmit a request along with the information provided by the user 108 to the accessing device 104C for automatically calling the elevator 114.

Exemplary computer readable media includes flash memory drives, digital versatile discs (DVDs), compact discs (CDs), floppy disks, and tape cassettes. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. Computer storage media are tangible and mutually exclusive to communication media. Computer storage media are implemented in hardware and exclude carrier waves and propagated signals. Computer storage media for purposes of this invention are not signals *per se.* Exemplary computer storage media include hard disks, flash drives, and other solid-state memory. In contrast, communication media typically embody computer readable instructions, data structures, program modules, or other data in a modulated data signal such as a carrier wave or other transport mechanism and include any information delivery media.

Although described in connection with an exemplary computing system environment, examples for performing the invention are capable of implementation with numerous other general purpose or special purpose computing system environments, configurations, or devices.

Examples for performing the invention may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the Figures and described herein. Other examples of the invention may include different computer-executable instructions or components having more or less functionality than illustrated and described herein.

Aspects of the invention transform a general-purpose computer into a special-purpose computing device when configured to execute the instructions described herein.

The order of execution or performance of the operations in examples of the invention illustrated and described herein is not essential, unless otherwise specified. That is, the operations may be performed in any order, unless otherwise specified, and examples of the invention may include additional or fewer operations than those disclosed herein. For example, it is contemplated that executing or performing a particular operation before, contemporaneously with, or after another operation is within the scope of aspects of the invention.

When introducing elements of aspects of the invention or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C".

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

## Claims

1. A method comprising:
advertising a state of an accessing device (104) associated with premises (102); transmitting the state of the accessing device (104) to a user device (106);
receiving at the accessing device (104), from the user device (106), a request along with information provided by a user (108) to call an elevator (114) after transmitting the state; and
transmitting, using the accessing device (104), the request and the information to a server (112) through a service network (110) for automatically calling the elevator (114);
wherein the server (112) communicates with a third party provider to initiate calling of the elevator (114) based on the information.

2. The method of claim 1, wherein the state associated with the accessing device (104) includes an open state or a close state of the accessing device (104).

3. The method of claim 1, wherein the information includes input provided by the user (108) in response to a prompt by the user device (106).

4. The method of claim 1, comprising:
receiving at the user device (106), from the accessing device (104), the state of the accessing device (104) associated with the premises (102);
prompting the user (108) of the user device (106) to provide the information in response to receiving of the state; and
transmitting the request along with the information provided by the user (108) to the accessing device (104).

5. The method of claim 4, further comprising, estimating a time by the user device (106) for the user (108) to reach the elevator (114).

6. The method of claim 4, wherein the state associated with the accessing device (104) includes an open state or a close state of the accessing device (104).

7. The method of claim 4, wherein the information includes input provided by the user (108) in response to a prompt by the user device (106).

8. The method of claim 7, wherein the prompt includes one or more questions posed to the user (108) with respect to the state.

9. The method of claim 8, wherein the questions posed to the user (108) include a question related to use of the elevator (114), a question related to exit from the premises (102), a question related to a destination floor of the user (108), or a question related to using any facility in the premises (102).

10. A system (100) comprising:
an accessing device (104) including:
a transceiver (202; 204) configured to advertise a state of the accessing device (104) associated with premises (102) and to transmit the state of the accessing device (102) to a user device (106);
the user device (106) including:
a receiver (404) configured to receive, from the transceiver (202; 204) of the accessing device (104), a state associated with the accessing device (104);
an interface (402) configured to prompt a user (108) of the user device (106) to provide information in response to receiving of the state; and
a transmitter (406) configured to transmit a request along with the information provided by the user (108) to the accessing device (104) for automatically calling an elevator (114); and
a server (112);
wherein the accessing device (104) receives the request along with the information and communicates the request along with the information to the server (112) through a service network (110); and
wherein the server (112) communicates with a third party provider to initiate calling of the elevator (114) based on the information.

11. The system (100) of claim 10, wherein the state associated with the accessing device (104) includes an open state or a close state of the accessing device (104).

12. The system (100) of claim 10, wherein the information includes input provided by the user (108) in response to a prompt by the user device (106).

13. The system (100) of claim 12, wherein the prompt includes one or more questions posed to the user (108) with respect to the state.

14. The system (100) of claim 13, wherein the questions posed to the user (108) include a question related to use of the elevator (114), a question related to exit from the premises (102), a question related to a destination floor of the user (108), or a question related to using any facility in the premises (102).

## Patentansprüche

1. Verfahren, umfassend:
Aussenden eines Zustands einer Zugangsvorrichtung (104), die einer Räumlichkeit (102) zugeordnet ist; Übertragen des Zustands der Zugangsvorrichtung (104) an eine Benutzervorrichtung (106);
Empfangen an der Zugangsvorrichtung (104), von der Benutzervorrichtung (106), einer Anfrage zusammen mit von einem Benutzer (108) bereitgestellten Informationen, um nach dem Übertragen des Zustands einen Aufzug (114) zu rufen; und
Übertragen, unter Verwendung der Zugangsvorrichtung (104), der Anfrage und der Informationen an einen Server (112) durch ein Servicenetzwerk (110), um automatisch den Aufzug (114) zu rufen;
wobei der Server (112) mit einem Drittdienstleister kommuniziert, um das Rufen des Aufzugs (114) basierend auf den Informationen zu initiieren.

2. Verfahren nach Anspruch 1, wobei der der Zugangsvorrichtung (104) zugeordnete Zustand einen offenen Zustand oder einen geschlossenen Zustand der Zugangsvorrichtung (104) einschließt.

3. Verfahren nach Anspruch 1, wobei die Informationen eine von dem Benutzer (108) bereitgestellte Eingabe als Reaktion auf eine Aufforderung durch die Benutzervorrichtung (106) einschließen.

4. Verfahren nach Anspruch 1, umfassend:
Empfangen an der Benutzervorrichtung (106), von der Zugangsvorrichtung (104), des Zustands der Zugangsvorrichtung (104), die der Räumlichkeit (102) zugeordnet ist;
Auffordern des Benutzers (108) der Benutzervorrichtung (106), die Informationen als Reaktion auf den Empfang des Zustands bereitzustellen; und
Übertragen der Anfrage zusammen mit den von dem Benutzer (108) bereitgestellten Informationen an die Zugangsvorrichtung (104).

5. Verfahren nach Anspruch 4, das weiter das Schätzen einer Zeit durch die Benutzervorrichtung (106) für das Erreichen des Aufzugs (114) durch den Benutzer (108) umfasst.

6. Verfahren nach Anspruch 4, wobei der der Zugangsvorrichtung (104) zugeordnete Zustand einen offenen Zustand oder einen geschlossenen Zustand der Zugangsvorrichtung (104) einschließt.

7. Verfahren nach Anspruch 4, wobei die Informationen eine von dem Benutzer (108) bereitgestellte Eingabe als Reaktion auf eine Aufforderung durch die Benutzervorrichtung (106) einschließen.

8. Verfahren nach Anspruch 7, wobei die Aufforderung eine oder mehrere an den Benutzer (108) gerichtete Fragen in Bezug auf den Zustand einschließt.

9. Verfahren nach Anspruch 8, wobei die an den Benutzer (108) gerichteten Fragen eine auf die Nutzung des Aufzugs (114) bezogene Frage, eine auf das Verlassen der Räumlichkeit (102) bezogene Frage, eine auf eine Zieletage des Benutzers (108) bezogene Frage oder eine auf die Nutzung irgendeiner Einrichtung in der Räumlichkeit (102) bezogene Frage einschließen.

10. System (100), umfassend:
eine Zugangsvorrichtung (104), einschließend:
einen Sendeempfänger (202; 204), der ausgebildet ist, einen Zustand der Zugangsvorrichtung (104), die einer Räumlichkeit (102) zugeordnet ist, auszusenden und den Zustand der Zugangsvorrichtung (102) an eine Benutzervorrichtung (106) zu übertragen;
wobei die Benutzervorrichtung (106) einschließt:
einen Empfänger (404), der ausgebildet ist, von dem Sendeempfänger (202; 204) der Zugangsvorrichtung (104) einen der Zugangsvorrichtung (104) zugeordneten Zustand zu empfangen;
eine Schnittstelle (402), die ausgebildet ist, einen Benutzer (108) der Benutzervorrichtung (106) aufzufordern, Informationen als Reaktion auf den Empfang des Zustands bereitzustellen; und einen Sender (406), der ausgebildet ist, eine Anfrage zusammen mit den von dem Benutzer (108) bereitgestellten Informationen an die Zugangsvorrichtung (104) zu übertragen, um automatisch einen Aufzug (114) zu rufen; und
einen Server (112);
wobei die Zugangsvorrichtung (104) die Anfrage zusammen mit den Informationen empfängt und die Anfrage zusammen mit den Informationen durch ein Servicenetzwerk (110) an den Server (112) übermittelt; und
wobei der Server (112) mit einem Drittdienstleister kommuniziert, um das Rufen des Aufzugs (114) basierend auf den Informationen zu initiieren.

11. System (100) nach Anspruch 10, wobei der der Zugangsvorrichtung (104) zugeordnete Zustand einen offenen Zustand oder einen geschlossenen Zustand der Zugangsvorrichtung (104) einschließt.

12. System (100) nach Anspruch 10, wobei die Informationen eine von dem Benutzer (108) bereitgestellte Eingabe als Reaktion auf eine Aufforderung durch die Benutzervorrichtung (106) einschließen.

13. System (100) nach Anspruch 12, wobei die Aufforderung eine oder mehrere an den Benutzer (108) gerichtete Fragen in Bezug auf den Zustand einschließt.

14. System (100) nach Anspruch 13, wobei die an den Benutzer (108) gerichteten Fragen eine auf die Nutzung des Aufzugs (114) bezogene Frage, eine auf das Verlassen der Räumlichkeit (102) bezogene Frage, eine auf eine Zieletage des Benutzers (108) bezogene Frage oder eine auf die Nutzung irgendeiner Einrichtung in der Räumlichkeit (102) bezogene Frage einschließen.

## Revendications

1. Procédé comprenant :
l'annonce d'un état d'un dispositif d'accès (104) associé à des locaux (102) ; la transmission de l'état du dispositif d'accès (104) à un dispositif utilisateur (106) ;
la réception, au niveau du dispositif d'accès (104), en provenance du dispositif utilisateur (106), d'une requête ainsi que des informations fournies par un utilisateur (108) pour appeler un ascenseur (114) après transmission de l'état ; et
la transmission, en utilisant le dispositif d'accès (104), de la requête et des informations à un serveur (112) par l'intermédiaire d'un réseau de service (110) pour appeler automatiquement l'ascenseur (114) ;
dans lequel le serveur (112) communique avec un prestataire tiers pour initier l'appel de l'ascenseur (114) sur la base des informations.

2. Procédé selon la revendication 1, dans lequel l'état associé au dispositif d'accès (104) inclut un état ouvert ou un état fermé du dispositif d'accès (104).

3. Procédé selon la revendication 1, dans lequel les informations incluent une entrée fournie par l'utilisateur (108) en réponse à une invite du dispositif utilisateur (106).

4. Procédé selon la revendication 1, comprenant :
la réception, au niveau du dispositif utilisateur (106), en provenance du dispositif d'accès (104), de l'état du dispositif d'accès (104) associé aux locaux (102) ;
l'invitation adressée à l'utilisateur (108) du dispositif utilisateur (106) à fournir les informations en réponse à la réception de l'état ; et
la transmission de la requête ainsi que des informations fournies par l'utilisateur (108) au dispositif d'accès (104).

5. Procédé selon la revendication 4, comprenant en outre, l'estimation, par le dispositif utilisateur (106), d'une période de temps pour que l'utilisateur (108) atteigne l'ascenseur (114).

6. Procédé selon la revendication 4, dans lequel l'état associé au dispositif d'accès (104) inclut un état ouvert ou un état fermé du dispositif d'accès (104).

7. Procédé selon la revendication 4, dans lequel les informations incluent une entrée fournie par l'utilisateur (108) en réponse à une invite du dispositif utilisateur (106).

8. Procédé selon la revendication 7, dans lequel l'invite inclut une ou plusieurs questions posées à l'utilisateur (108) à l'égard de l'état.

9. Procédé selon la revendication 8, dans lequel les questions posées à l'utilisateur (108) incluent une question relative à l'utilisation de l'ascenseur (114), une question relative à la sortie des locaux (102), une question relative à un étage de destination de l'utilisateur (108), ou une question relative à l'utilisation de toute installation dans les locaux (102).

10. Système (100) comprenant :
un dispositif d'accès (104) incluant :
un émetteur-récepteur (202 ; 204), configuré pour annoncer un état du dispositif d'accès (104) associé à des locaux (102) et pour transmettre l'état du dispositif d'accès (104) à un dispositif utilisateur (106) ;
le dispositif utilisateur (106) incluant :
un récepteur (404), configuré pour recevoir, en provenance de l'émetteur-récepteur (202 ; 204) du dispositif d'accès (104), un état associé au dispositif d'accès (104) ;
une interface (402), configurée pour inviter un utilisateur (108) du dispositif utilisateur (106) à fournir des informations en réponse à la réception de l'état ; et un émetteur (406) configuré pour transmettre une requête ainsi que les informations fournies par l'utilisateur (108) au dispositif d'accès (104) pour appeler automatiquement un ascenseur (114) ; et
un serveur (112) ;
dans lequel le dispositif d'accès (104) reçoit la requête ainsi que les informations et communique la requête ainsi que les informations au serveur (112) par l'intermédiaire d'un réseau de service (110) ; et
dans lequel le serveur (112) communique avec un prestataire tiers pour initier l'appel de l'ascenseur (114) sur la base des informations.

11. Système (100) selon la revendication 10, dans lequel l'état associé au dispositif d'accès (104) inclut un état ouvert ou un état fermé du dispositif d'accès (104).

12. Système (100) selon la revendication 10, dans lequel les informations incluent une entrée fournie par l'utilisateur (108) en réponse à une invite du dispositif utilisateur (106).

13. Système (100) selon la revendication 12, dans lequel l'invite inclut une ou plusieurs questions posées à l'utilisateur (108) à l'égard de l'état.

14. Système (100) selon la revendication 13, dans lequel les questions posées à l'utilisateur (108) incluent une question relative à l'utilisation de l'ascenseur (114), une question relative à la sortie des locaux (102), une question relative à un étage de destination de l'utilisateur (108), ou une question relative à l'utilisation de toute installation dans les locaux (102).
